# EUROPÄISCHE PATENTSCHRIFT

(11) **EP 2 331 634 B1**
(45) Veröffentlichungstag und Bekanntmachung des Hinweises auf die Patenterteilung: **14.12.2016**
(21) Anmeldenummer: 09783242.2
(22) Anmeldetag: 21.09.2009
(51) Int. Cl.: C08K 3/00, C08K 5/00, C08L 33/06, C08L 33/08, C08L 33/10, C08L 35/06, C08L 63/10, C08L 67/02, C08L 67/04, C08L 69/00, C08L 97/02

(54) **BIOLOGISCH ABBAUBARE POLYMERMISCHUNG**
BIODEGRADABLE POLYMERBLENDS
MELANGES DE POLYMERES BIODEGRADABLES

(30) Priorität: 29.09.2008 EP 08165370; 04.12.2008 EP 08170633
(43) Veröffentlichungstag der Anmeldung: 15.06.2011
(73) Patentinhaber: BASF SE, 67056 Ludwigshafen am Rhein (DE)
(72) Erfinder: STEINKE, Tobias Heinz, 67346 Speyer (DE); GÖRTZ, Hans-Helmut, 67251 Freinsheim (DE); AHLERS, Jürgen, 68649 Groß-Rohrheim (DE); GRUBER, Freddy, 76877 Offenbach (DE); SKUPIN, Gabriel, 67346 Speyer (DE)
(74) Vertreter: BASF IP Association
(86) Internationale Anmeldenummer: PCT/EP2009/062202
(87) Internationale Veröffentlichungsnummer: WO 2010/034689

(56) Entgegenhaltungen:
- WO-A1-2007/125039
- DE-A1-102005 053 068
- DATABASE WPI Week 200542 Thomson Scientific, London, GB; AN 2005-410682 XP002557516 -& JP 2005 146482 A (DOKURITSU GYOSEI HOJIN SANGYO GIJUTSU SO) 9. Juni 2005 (2005-06-09)
- DATABASE CA [Online] CHEMICAL ABSTRACTS SERVICE, COLUMBUS, OHIO, US; 28. Juni 2007 (2007-06-28), KOBAYASHI, SADAYUKI ET AL: "Heat- and impact-resistant styrene resin compositions with lowered carbon dioxide emission in their manufacture" XP002557517 gefunden im STN Database accession no. 2007:697654 -& JP 2007 161837 A (TORAY INDUSTRIES, INC., JAPAN) 28. Juni 2007 (2007-06-28)

## Beschreibung

Die vorliegende Erfindung betrifft biologisch abbaubare Polymermischungen, umfassend
i) 40 bis 95 Gew.-%, bezogen auf das Gesamtgewicht der Komponenten i bis ii, mindestens eines Polyesters auf Basis von aliphatischen oder aliphatischen-aromatischen Dicarbonsäuren und aliphatischen Dihydroxyverbindung;
ii) 5 bis 60 Gew.-%, bezogen auf das Gesamtgewicht der Komponenten i bis ii, Polyalkylencarbonat, insbesondere Polypropylencarbonat;
iii) 0 bis 60 Gew.-%, bezogen auf das Gesamtgewicht der Komponenten i bis iii, mindestens eines biologisch abbaubarer Homo- oder Copolyester ausgewählt aus der Gruppe bestehend aus Polymilchsäure, Polycaprolacton, Polyhydroxyalkanoate und eines anorganischen oder organischen Füllstoffs;
iv) 0,1 bis 5 Gew.-%, bezogen auf das Gesamtgewicht der Komponenten i bis ii, eines Epoxidgruppen-haltigen Copolymers auf Basis Styrol, Acrylsäureester und/oder Methacrylsäureester und
v) 0 bis 15 Gew.-% eines Additivs ausgewählt aus der Gruppe bestehend aus Gleitmittel, Antiblockmittel, Antistatikum, UV-Absorber, UV-Stabilisator, thermischer Stabilisator, Farbstoff, Pigment, Farbmittel, Weichmacher, Düngemittel und Pflanzenschutz-Wirkstoff.

Weiterhin betrifft die vorliegende Erfindung Verfahren zur Herstellung biologisch abbaubarer Polymermischungen, die Verwendung von biologisch abbaubaren Polymermischungen zur Herstellung von Formteilen, Folien oder Fasern sowie Formteile, Folien oder Fasern umfassend biologisch abbaubare Polymermischungen.

Biologisch abbaubare Mischungen - enthaltend i) 20 bis 5 Gew.-% eines Polyesters auf Basis von aliphatischen und aromatischen Dicarbonsäuren und aliphatischen Dihydroxyverbindung ii) 20 bis 80 Gew.-% Polypropylencarbonat und iii) 60 bis 15 Gew.-% Polylactid - sind bereits aus WO 2007/125039 bekannt. In diesen Polymermischungen bildet stets das Polypropylencarbonat bzw. die Mischung aus Polypropylencarbonat und Polymilchsäure die kontinuierliche Phase. Diese Mischungen enthaltende Folien können im Hinblick auf die mechanischen Eigenschaften nicht immer überzeugen.

In der Praxis ist es oftmals schwierig, die angestrebte Eigenschaftskombination durch Mischungen zu erreichen. Die Eigenschaften der Mischungen setzen sich nicht additiv aus den Eigenschaften der Einzelkomponenten zusammen. Weiterhin sind Eigenschaften wie Zähigkeit und Steifigkeit häufig gegenläufig. Weiterhin geht bei vielen Polymermischungen Eigenschaften der Einzelkomponenten wie Transparenz, Barrierewirkung zumindest teilweise verloren.

Der vorliegenden Erfindung liegt somit die Aufgabe zugrunde, biologisch abbaubare Mischungen mit guten Barriereeigenschaften und guten mechanischen Eigenschaften wie hoher Zug- und Durchstoßfestigkeit bereitzustellen.

Diese Aufgabe wird von den eingangs definierten biologisch abbaubaren Polymermischungen, die im Folgenden näher beschrieben sind, erfüllt. Die erfindungsgemäßen Polymermischungen unterscheiden sich von denjenigen des Standes der Technik insbesondere dadurch, dass sie einen höheren Anteil an Komponente i aufweisen. Vorzugsweise bildet Komponente i in den Polymermischungen die kontinuierliche Phase aus.

Prinzipiell kommen für die Herstellung der erfindungsgemäßen biologisch abbaubaren Polyestermischungen als Komponente i alle Polyester auf Basis von aliphatischen und aromatischen Dicarbonsäuren und aliphatischen Dihydroxyverbindung, sogenannte teilaromatische Polyester oder aliphatische Polyester aus aliphatischen Dicarbonsäuren und aliphatischen Diolen in Betracht. Gemeinsam ist diesen Polyestern, dass sie biologisch abbaubar nach DIN EN 13432 sind. Selbstverständlich sind auch Mischungen mehrerer solcher Polyester als Komponente i geeignet.

Unter teilaromatischen Polyestern (Komponente i) sollen erfindungsgemäß auch Polyesterderivate verstanden werden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften , WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie EP 08165372.7). Insbesondere sind unter teilaromatischen Polyestern Produkte wie Ecoflex^{®} (BASF SE) und Eastar^{®} Bio, Origo-Bi^{®} (Novamont) zu verstehen.

Zu den besonders bevorzugten teilaromatischen Polyestern zählen Polyester, die als wesentliche Komponenten
A) eine Säurekomponente aus
   a1) 30 bis 99 mol-% mindestens einer aliphatischen Dicarbonsäure oder deren ester-bildende Derivate oder Mischungen davon
   a2) 1 bis 70 mol-% mindestens einer aromatischen Dicarbonsäure oder deren esterbildendem Derivat oder Mischungen davon und
   a3) 0 bis 5 mol-% einer sulfonatgruppenhaltigen Verbindung,
B) eine Diolkomponente ausgewählt aus mindestens einem C₂-bis C₁₂-Alkandiol oder Mischungen davon
   und gewünschtenfalls darüber hinaus eine oder mehrere Komponenten ausgewählt aus
C) einer Komponente ausgewählt aus
   c1) mindestens einer Etherfunktionen enthaltenden Dihydroxyverbindung der Formel I

      HO-[(CH₂)ₙ-O]ₘ-H (I)

      in der n für 2, 3 oder 4 und m für eine ganze Zahl von 2 bis 250 stehen
   c2) mindestens einer Hydroxycarbonsäure oder Formel IIa oder lib 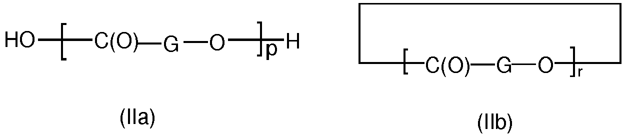 in der p eine ganze Zahl von 1 bis 1500 und r eine ganze Zahl von 1 bis 4 bedeuten, und G für einen Rest steht, der ausgewählt ist aus der Gruppe bestehend aus Phenylen, o- Hydroxyphenylen, -(CH₂)_{q}-, wobei q eine ganze Zahl von 1 bis 5 bedeutet, -C(R)H- und -C(R)HCH₂, wobei R für Methyl oder Ethyl steht
   c3) mindestens einem Amino-C₂- bis C₁₂-alkanol oder mindestens einem Amino-C₅-bis C₁₀-cycloalkanol oder Mischungen davon
   c4) mindestens einem Diamino-C₁-bis C₈-Alkan
   c5) mindestens einem 2,2'-Bisoxazolins der allgemeinen Formel III 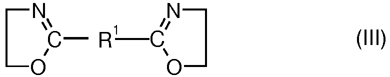 wobei R¹ eine Einfachbindung, eine (CH₂)_{z}-Alkylengruppe, mit z = 2, 3 oder 4, oder eine Phenylengruppe bedeutet
   c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und Ivb 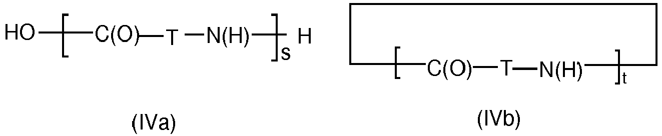 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht, und Polyoxazolinen mit der wiederkehrenden Einheit V 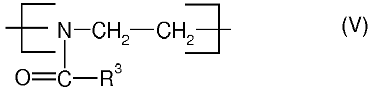 in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
   oder Mischungen aus c1 bis c6
   und
D) einer Komponente ausgewählt aus
   d1) einer Verbindung mit mindestens drei zur Esterbildung befähigten Gruppen,
   d2) eines Di- oder Polyisocyanates,
   d3) eines Di- oder Polyepoxids
   oder Mischungen aus d1) bis d3) enthalten.

Die Säurekomponente A der teilaromatischen Polyester enthält in einer bevorzugten Ausführungsform von 30 bis 70, insbesondere von 40 bis 60 mol-% a1 und von 30 bis 70, insbesondere von 40 bis 60 mol-% a2.

Als aliphatische Säuren und die entsprechenden Derivate a1 kommen im Allgemeinen solche mit 2 bis 18 Kohlenstoffatomen, vorzugsweise 4 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Oxalsäure, Malonsäure, Bernsteinsäure, Glutarsäure, 2-Methylglutarsäure, 3-Methylglutarsäure, α-Ketoglutar,säure, Adipinsäure, Pimelinsäure, Azelainsäure, Sebacinsäure, Brassylsäure, Fumarsäure, 2,2-Dimethylglutarsäure, Suberinsäure (Korksäure), Diglykolsäure, Oxalessigsäure, Glutaminsäure, Asparaginsäure, Itaconsäure und Maleinsäure. Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt wird Bernsteinsäure, Adipinsäure oder Sebacinsäure oder deren jeweilige esterbildenden Derivate oder Mischungen davon eingesetzt. Besonders bevorzugt wird Adipinsäure oder deren esterbildende Derivate, wie deren Alkylester oder deren Mischungen eingesetzt. Als aliphatische Dicarbonsäure werden Sebacinsäure oder Mischungen von Sebacinsäure mit Adipinsäure bevorzugt eingesetzt, wenn Polymermischungen mit "harten" bzw. "spröden" Komponenten ii) wie beispielsweise Polyhydroxybutyrat oder insbesondere Polylactid hergestellt werden. Als aliphatische Dicarbonsäure werden Bernsteinsäure oder Mischungen von Bernsteinsäure mit Adipinsäure bevorzugt eingesetzt, wenn Polymermischungen mit "weichen" bzw. "zähen" Komponenten ii) wie beispielsweise Polyhydroxybuyratcovaleriat hergestellt werden.

Bernsteinsäure, Azelainsäure, Sebacinsäure und Brassylsäure haben zudem den Vorteil dass sie als nachwachsende Rohstoffe zugänglich sind.

Die aromatischen Dicarbonsäuren oder deren esterbildende Derivate a2 können einzeln oder als Gemisch aus zwei oder mehr davon eingesetzt werden. Besonders bevorzugt wird Terephthalsäure oder deren esterbildende Derivate wie Dimethylterephthalat, verwendet.

Im Allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl- 1,3-propandiol, 2-Ethyl-2-butyl-1,3-propandiol, 2-Ethyl-2-isobutyl- 1,3-propandiol, 2,2,4-Trimethyl-1,6-hexandiol, insbesondere Ethylenglykol, 1,3-Propandiol, 1,4-Butandiol und 2,2-Dimethyl- 1,3-propandiol (Neopentylglykol); Cyclopentandiol, 1,4-Cyclohexandiol, 1,2-Cyclohexandimethanol, 1,3-Cyclohexandimethanol, 1,4-Cyclohexandimethanol oder 2,2,4,4-Tetramethyl-1,3-cyclobutandiol. Besonders bevorzugt sind 1,4-Butandiol, insbesondere in Kombination mit Adipinsäure als Komponente a1) und 1,3- Propandiol, insbesondere in Kombination mit Sebacinsäure als Komponente a1). 1,3- Propandiol hat zudem den Vorteil, dass es als nachwachsender Rohstoff zugänglich ist. Es können auch Mischungen unterschiedlicher Alkandiole verwendet werden.

Abhängig davon ob ein Überschuss an Säure- oder OH-Endgruppen gewünscht wird, kann entweder die Komponente A oder die Komponente B im Überschuss eingesetzt werden. Nach einer bevorzugten Ausführungsform kann das Molverhältnis der eingesetzten Komponenten A zu B im Bereich von 0,4:1 bis 1,5:1, bevorzugt im Bereich von 0,6:1 bis 1,1:1 liegen.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Die genannten teilaromatischen Polyester können Hydroxy- und/oder Carboxylendgruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden.

Neben den Komponenten A und B können die Polyester, auf denen die erfindungsgemäßen Polyestermischungen basieren, weitere, wie die zuvor genannten Komponenten C und D enthalten.

Unter aliphatischen Polyestern (Komponente i) werden Polyester aus aliphatischen Diolen und aliphatischen Dicarbonsäuren wie Polybutylensuccinat (PBS), Polybutylensuccinatadipat (PBSA), Polybutylensuccinatsebacat (PBSSe), Polybutylensebacat (PBSe) oder entsprechende Polyesteramide verstanden. Die aliphatischen Polyester werden von den Firmen Showa Highpolymers unter dem Namen Bionolle und von Mitsubishi unter dem Namen GSPIa vermarktet. Neuere Entwicklungen sind in der EP08165370.1 beschrieben.

Unter aliphatischen Polyestern (Komponente i) werden auch cycloaliphatische Polyester insbesondere Cellulosealkylester wie Celluloseacetat, Celluloseacetatbutyrat oder Cellulosebutyrat verstanden.

Unter Polyalkylencarbonaten (Komponente ii) werden in erster Linie Polyethylencarbonat (siehe EP-A 1264860), erhältlich durch Copolymerisation von Ethylenoxid und Kohlendioxid und insbesondere Polypropylencarbonat (siehe beispielsweise WO 2007/125039 PPC), erhältlich durch Copolymerisation von Propylenoxid und Kohlendioxid verstanden.

Die Polyalkylencarbonat-Kette kann sowohl Ether- als auch Carbonatgruppen enthalten. Der Anteil an Carbonatgruppen im Polymer ist abhängig von den Reaktionsbedingungen wie insbesondere dem verwendeten Katalysator. In den bevorzugten Polyalkylencarbonaten sind mehr als 85 und bevorzugt mehr als 90 % aller Verknüpfungen Cabonat-Gruppen. Geeignete Zink- und Kobalt-Katalysatoren sind in US 4789727 und US 7304172 beschrieben. Polypropylencarbonat kann weiterhin analog Soga et al., Polymer Journal, 1981, 13, 407-10 hergestellt werden. Das Polymer ist auch kommerziell erhältlich und wird beispielsweise von Empower Materials Inc. oder Aldrich im Markt angeboten.

Bei der Aufarbeitung ist es besonders wichtig, den Katalysator möglichst quantitativ zu entfernen. Hierzu wird in der Regel die Reaktionsmischung mit einem polaren aprotischen Lösungsmittel wie beispielsweise einem Carbonsäureester (insbesondere Essigsäureethylester), einem Keton (insbesondere Aceton), einem Ether (insbesondere Tetrahydrofuran) auf das 2 bis 10 fache Volumen verdünnt. Anschließend wird mit einer Säure wie Essigsäure und/oder einem Säureanhydrid wie Essigsäureanhydrid versetzt und mehrere Stunden bei leicht erhöhter Temperatur gerührt. Die organische Phase wird gewaschen und getrennt. Das Lösungsmittel wird vorzugsweise im Vakuum abdestilliert und der Rückstand getrocknet.

Das Molekulargewicht Mn der nach den obengenannten Verfahren hergestellten Polypropylencarbonate beträgt in der Regel 70.000 bis 90.000 Da. Das Molekulargewicht Mw liegt üblicherweise bei 250.000 bis 400.000 Da. Das Verhältnis der Ether- zu Carbonat-Gruppen im Polymer beträgt 5:100 bis 90:100. Zur Verbesserung der Anwendungseigenschaften kann es von Vorteil sein, die Polyalkylencarbonate mit MSA, Essigsäureanhydrid, Di- oder Polyisocyanaten, Di- oder Polyoxazoline oder -oxazine oder Di- oder Polyepoxiden zu behandeln. Polypropylencarbonate mit einem Molekulargewicht Mn von 30.000 bis 5.000.000 , bevorzugt 35.000 bis 250.000 und insbesondere bevorzugt von 40.000 bis 150.000 Da lassen sich auf diese Weise herstellen. Polypropylencarbonate mit einem Mn von unter 25.000 Da weisen üblicherweise niedrige Glastemperaturen von unter 25°C auf. Zudem weisen diese Formmassen ein E-Modul nach ISO 527-2 bzw. DIN 53455 von kleiner 400 MPa und eine Bruchspannung kleiner 10 MPa auf. Für die meisten Folienanwendungen sind diese niedermolekularen Polypropylencarbonate nicht zu verwenden, Die Polydispersität (Verhältnis von Gewichtsmittel (Mw) zu Zahlenmittel (Mn)) liegt in der Regel zwischen 1 und 80 und vorzugsweise zwischen 2 und 10. Die verwendeten Polypropylencarbonate können bis zu 1% Carbamat- und Harnstoff-Gruppen enthalten.

Als Kettenverlängerer für die Polyalkylencarbonate werden insbesondere MSA, Essigsäureanhydrid, Di- oder Polyisocyanaten, Di- oder Polyoxazoline oder -oxazine oder Di- oder Polyepoxiden eingesetzt. Beispiele für Isocyanate sind Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat und insbesondere 1,6-Hexamethylendiisocyanat, Isophorondiisocyanat oder Methylen-bis(4-isocyanatocyclo-hexan), verstanden. Besonders bevorzugte aliphatische Diisocyanate sind Isophorondiisocyanat und insbesondere 1,6-Hexamethylendiisocyanat. Als Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt. Die Kettenverlängerer werden vorzugsweise in Mengen von 0,01 bis 5, bevorzugt 0,05 bis 2, besonders bevorzugt 0,08 bis 1 Gew.-%, bezogen auf die Polymermenge eingesetzt.

Als Komponenten iii kann ein oder mehrere, biologisch abbaubare Homo- oder Copolyester ausgewählt aus der Gruppe bestehend aus Polymilchsäure, Polycaprolacton und Polyhydroxyalkanoat und/oder ein anorganischer oder organischer Füllstoff eingesetzt werden. Bevorzugte Komponenten iii sind Polymilchsäure (PLA) und Polyhydroxyalkanoate, und hier insbesondere Polyhydroxybutyrat (PHB) und Polyhydroxybutyratco-valeriat (PHBV) sowie als organische Füllstoffe: native oder plastifizierte Stärke, Holzmehl oder Naturfasern wie Sisal, Cellulose und/oder anorganische Füllstoffe wie: Kreide, Graphit, Gips, Leitruß, Eisenoxid, Calciumchlorid, Dolomot, Kaolin, Siliziumdioxid, Natriumcarbonat, Titandioxid, Silikat, Wollastonit, Glimmer, Montmorellonit, und insbesondere Talkum, Glasfasern und Mineralfasern.

Polymilchsäure (Komponente iii) mit dem folgenden Eigenschaftsprofil wird bevorzugt eingesetzt:
- einer Schmelzvolumenrate (MVR bei 190° C und 2.16 kg nach ISO 1133 von 0.5 - vorzugsweise 2 - bis 30 insbesondere 9 ml/10 Minuten
- einem Schmelzpunkt unter 240°C;
- einem Glaspunkt (Tg) größer 55°C
- einem Wassergehalt von kleiner 1000 ppm
- einem Monomeren-Restgehalt (Lactid) von kleiner 0,3 %.
- einem Molekulargewicht von größer 80 000 Dalton.

Bevorzugte Polymilchsäuren sind beispielsweise NatureWorks® 4020 oder 4042D (Polymilchsäure der Fa. NatureWorks).

Unter Polyhydroxyalkanoaten werden in erster Linie Poly-4-hydroxybutyrate und Poly-3-hydroxybutyrate verstanden, weiterhin sind Copolyester der vorgenannten Hydroxybutyrate mit 3-Hydroxyvaleraten oder 3-Hydroxyhexanoat umfasst. Poly-3-hydroxybutyrate-co-4-hydroxybutyrate sind insbesondere von der Fa. Metabolix bekannt. Sie werden unter dem Handelsnamen Mirel® vertrieben. Poly-3-hydroxybutyrate-co-3-hydroxyhexanoate sind von der Fa. P&G oder Kaneka bekannt. Poly-3-hydroxybutyrate werden beispielsweise von der Fa. PHB Industrial unter dem Markennamen Biocycle® und von der Fa. Tianan unter dem Namen Enmat® vertrieben.

Die Polyhydroxyalkanoate weisen in der Regel ein Molekulargewicht Mw von 100.000 bis 1.000.000 und vorzugsweise von 300.000 bis 600.000 auf.

Polycaprolacton wird beispielsweise von der Fa. Daicel unter dem Produktnamen Placcel® vermarktet.

In einer bevorzugten Ausführungsform werden 1 bis 60 Gew.-%, vorzugsweise 5 bis 40 Gew.-% bezogen auf das Gesamtgewicht der Komponenten i bis iii, eines organischen Füllstoffs ausgewählt aus der Gruppe bestehend aus: nativer oder plastifizierter Stärke, Naturfasern, Holzmehl, zerkleinertem Kork, gemahlenen Rinden, Nussschalen, gemahlene Presskuchen (Pflanzenölraffinerie), getrocknete Produktionsrückstände aus der Fermentation oder Destillation von Getränken wie z.B. Bier, gebrauten Limonaden (z.B. Bionade), Wein oder Sake und/oder eines anorganischen Füllstoffs ausgewählt aus der Gruppe bestehend aus: Kreide, Graphit, Gips, Leitruß, Eisenoxid, Calciumchlorid, Dolomit, Kaolin, Siliziumdioxid (Quarz), Natriumcarbonat, Titandioxid, Silikat, Wollastonit, Glimmer, Montmorellonite, Talkum, Glasfasern und Mineralfasern.

Stärke und Amylose können nativ, d.h. nicht thermoplastifiziert oder mit Weichmachern wie beispielsweise Glycerin oder Sorbit thermoplastifiziert sein (EP-A 539 541, EP-A 575 349, EP 652 910).

Unter Naturfasern werden zum Beispiel Cellulosefasern, Hanffasern, Sisal, Kenaf, Jute, Flax, Abacca, Kokosfaser oder Cordenkafasern verstanden.

Als bevorzugte faserförmige Füllstoffe seien Glasfasern, Kohlenstofffasern, AramidFasern, Kaliumtitanat-Fasern und Naturfasern genannt, wobei Glasfasern als E-Glas besonders bevorzugt sind. Diese können als Rovings oder insbesondere als Schnittglas in den handelsüblichen Formen eingesetzt werden. Diese Fasern weisen im Allgemeinen einen Durchmesser von 3 bis 30µm, bevorzugt 6 bis 20µm und besonderes bevorzugt von 8 bis 15µm auf. Die Faserlänge im Compound beträgt in der Regel 20µm bis 1000µm, bevorzugt 180 bis 500µm und besonderes bevorzugt 200 bis 400µm.

Unter Komponente iv werden insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mw der Polymere beträgt vorzugsweise 2000 bis 25.000, insbesondere 3000 bis 8.000. Das mittlere Molekulargewicht (Zahlenmittel) Mn der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl® ADR vertrieben. Als Kettenverlängerer besonders geeignet ist Joncryl® ADR 4368.

Komponente iv) wird in der Regel in 0,1 bis 5 Gew.-%, und besonders bevorzugt in 0,5 bis 2 Gew.-%, bezogen auf das Gesamtgewicht der Komponenten i) bis iii), eingesetzt.

Die erfindungsgemäßen biologisch abbaubaren Polyestermischungen können weitere dem Fachmann bekannte, aber nicht erfindungswesentliche Additive (Komponente v) enthalten. Beispielsweise die in der Kunststofftechnik üblichen Zusatzstoffe wie Stabilisatoren; Nukleierungsmittel; Neutralisationsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; thermische Stabilisatoren; Antifog-Mittel; Farbstoffe; Farbpigmente oder Wirkstoffe (z.B. Pflanzenschutzmittel wie Fungizide, Insektizide, Biozide, Wachstumsförderer, Pheromene und Vitamine). Als Additive können auch Epoxidgruppen-haltige (epoxidierte) natürliche Öle oder Fettsäureester eingesetzt werden. Unter natürlichen Ölen werden beispielsweise Olivenöl, Leinöl, Sojabohnenöl, Palmöl, Erdnussöl, Kokosnussöl, Tangöl, Lebertran oder eine Mischung von diesen Verbindungen verstanden. Insbesondere bevorzugt sind epoxidiertes Sojabohnenöl (z.B. Merginat® ESBO von Hobum, Hamburg, oder Edenol® B 316 von Cognis, Düsseldorf). Die Additive werden in Konzentrationen von 0 bis 15 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

### Typische Polymermischungen enthalten:

Die erfindungsgemäßen biologisch abbaubaren Polyestermischungen enthalten üblicherweise von 40 bis 95 Gew.-%, bevorzugt von 40 bis 80 Gew.-%, besonders bevorzugt von 40 bis 60 Gew.-% Komponente i und von 5 bis 60 Gew.-%, bevorzugt von 20 bis 60 Gew.-%, besonders bevorzugt von 40 bis 60 Gew.-% Komponente ii, wobei sich die Gewichtsprozente jeweils auf das Gesamtgewicht der Komponenten i bis ii beziehen und zusammen 100 Gew.-% ergeben.

Für die Herstellung von extrudierten Thermoplasten wie beispielsweise Folien ist die Blasenstabilität von großer Bedeutung. Es wurde nun gefunden, dass Mischungen, in denen Komponente i eine vorzugsweise kontinuierliche Phase oder zumindest kokontinuierliche Phase ausbildet und Komponente ii in separaten Bereichen in diese Phase eingebettet ist, gute Blasenstabilität aufweisen. Damit Komponente i eine kontinuierliche Phase ausbildet, weisen die Mischungen in der Regel mehr als 40 Gew.-%, vorzugsweise mehr als 50 Gew.-% an Komponente i bezogen jeweils auf das Gesamtgewicht der Komponenten i und ii, auf.

Für die Herstellung von Formteilen durch beispielsweise Spritzguss können Polyestermischungen mit hohem Polyhydroxybutyrat (PHB)- oder insbesondere Polymilchsäure (PLA)-Anteil (Komponente iii) eingesetzt werden. Insbesondere Polymilchsäure aber im gewissen Grade auch Polyhydroxyalkanoate bilden über weite Bereiche eine kokontinuierliche Phase mit Polypropylencarbonat aus.

Bevorzugte Ausführungsformen der erfindungsgemäßen Polymermischungen enthalten:
20 bis 80 Gew.-%, besonders bevorzugt 40 bis 60 Gew.-%, bezogen auf das Gesamtgewicht der Komponenten i bis ii, Komponente i; und
80 bis 20 Gew.-%, besonders bevorzugt 60 bis 40 Gew.-%, bezogen auf das Gesamtgewicht der Komponenten i bis ii, einer Mischung bestehend aus:
   - 20 bis 80 Gew.-% Polypropylencarbonat; und
   - 80 bis 20 Gew.-% Polyhydroxyalkanoat und insbesondere Polymilchsäure.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Die Herstellung der erfindungsgemäßen biologisch abbaubaren Polymermischungen aus den einzelnen Komponenten kann nach bekannten Verfahren erfolgen (EP 792 309 und US 5,883,199). Beispielsweise können alle Mischungspartner in einem Verfahrensschritt in dem Fachmann bekannten Mischvorrichtungen, beispielsweise Knetern oder Extrudern bei erhöhten Temperaturen, beispielsweise von 120°C bis 250°C, gemischt und zur Reaktion gebracht werden.

Beispielsweise können alle Komponenten i, ii und iii in einem Verfahrensschritt in dem Fachmann bekannten Mischvorrichtungen, beispielsweise Knetern oder Extrudern bei erhöhten Temperaturen, beispielsweise von 120°C bis 250°C, gemischt und zur Reaktion gebracht werden.

Darüber hinaus kann es vorteilhaft sein, die zunächst die Komponenten i und ii zu mischen und anschließend mit einem Gemisch der Komponenten iii und iv zu versetzen bzw. zur Reaktion zu bringen.

Auch hat es sich bei den ternären Mischungen aus den Komponenten i bis iii als vorteilhaft erwiesen, die Komponenten ii und iii vorzumischen und mit einer Mischung aus Komponente i, Komponente iv und gegebenenfalls Komponente v zu versetzen.

Hierzu wird in einem ersten Schritt 1 bis 50 Gew.-%, bevorzugt 5 - 35 Gew.-% Komponente iv mit 50 bis 99 Gew.-% und bevorzugt 65 bis 95 Gew.-% Komponente i bei Temperaturen von 110 bis 145°C - vorzugsweise 120 bis 140°C - zu einem Verzweigerbatch gemischt. Bei diesen Temperaturen wird ein homogener Blend erhalten, ohne dass es zu einem nennenswerten Molekulargewichtsaufbau käme. Der so erhaltene Verzweigerbatch lässt sich bei Raumtemperatur problemlos aufbewahren. In einem zweiten Schritt kann durch Zugabe des Verzweigerbatches zu Komponente ii und iii und gegebenenfalls weiterer Komponente i die gewünschte Zusammensetzung eingestellt werden. Dieser Compoundierungsschritt wird bei 150 bis 250°C - vorzugsweise bei 160 bis 190°C - durchgeführt.

Die erfindungsgemäßen biologisch abbaubaren Polyestermischungen sind besonders zur Herstellung von, Formteilen, Folien oder Fasern geeignet. Die Herstellung kann nach dem Fachmann bekannten Methoden erfolgen.

Ein besonderes Anwendungsgebiet der biologisch abbaubaren Polyestermischungen mit verbesserten Abbauraten betrifft die Verwendung zur Herstellung von Folien, insbesondere Mulchfolien für die Agrarwirtschaft. Solche Mulchfolien werden zum Schutz und zur Wachstumsbeschleunigung meist junger Setzlinge auf landwirtschaftlichen Flächen ausgebracht. Nach der Ernte werden diese Mulchfolien auf der landwirtschaftlichen Fläche belassen oder - bei biologisch abbaubaren Mulchfolien - untergepflügt. Bis zum Beginn der nächstjährigen Aussaat ist ein weitgehender biologischer Abbau dieser Mulchfolien notwendig.

Die erfindungsgemäßen Polymermischungen eignen sich vortrefflich für Schaumanwendungen (siehe EP 07102477.2 und EP 07102497.0; "foam extrusion - principles and practice", Shau-Tarng Lee, 376 pages, CRC Press, 2000; "thermoplastic foam extrusion", James Thorne, Carl Hanser, 2006). Dabei ergeben sich die folgenden Vorteile:
- Transluzente, hoch lichtdurchlässige Schaummassen
- Soft touch - selbst in coextrudierter Form
- Biologische Abbaubarkeit nach DIN EN 13432
- Interessante Haptik
- Geeignet für Lebensmittelverpackungen
- Hohe UV-Beständigkeit
- Niedrige Dichte
- Gute Schallisolierung
- Gute Barriereeigenschaften.

Die Schäume eignen sich als Schalen, Behälter für Fleisch, Fisch, Früchte, Gemüse, Meerestiere, Fast Food-Produkte; als Schutzhaut für Produkte mit empfindlicher Oberfläche, wie Verbrauchsgüter, Autos, Elektroartikel, Hifi-Geräte, Telefone Handys; Verpackungsmaterialien, Einlagen und Reinigungsschwämme.

Die erfindungsgemäßen Polymermischungen lassen sich zu Schaumlagen oder auch Partikelschäumen mit geringer Dichte verarbeiten. Schäume mit einer Dichte deutlich unter150 g/L lassen sich beispielsweise mit einer binären Mischung aus 59 Gew.-% aliphatisch/aromatischen Polyester (Ecoflex® FBX 7011) und 40 Gew.-% Polypropylencarbonat realisieren (siehe Beispiel 1). Reines Polypropylencarbonat lässt sich gleichfalls verschäumen, weist jedoch eine höhere Dichte auf. Vorteilhaft ist es der Polymermischung vor dem Schämen 0,02 bis 5, vorzugsweise 0,1 bis 2 Gew.-% eines Nukleierungsmittels hinzuzugeben. Als Nukleierungsmittel kommen insbesondere Talkum, Kreide, Ruß oder andere mineralische Füllstoffe in Frage. Als Treibmittel kommen insbesondere physikalische Treibmittel wie Stickstoff, Butan, Pentan und insbesondere Kohlendioxid in Frage. Während des Verschäumens werden im Allgemeinen das Treibmittel mit einem Druck von bis zu 400 atm beaufschlagt. Das Verschäumen kann dabei sowohl in einem Extrusions - wie in einem Spritzgussverfahren erfolgen. Auch das Hinterspritzen einer Folie hat sich bewährt. Das Verschäumen erfolgt in der Regel bei Temperaturen von 30 bis 240°C, vorzugsweise bei 40 bis 100 °C. Die Schäume sind homogene mikrozelluläre Strukturen und weisen in der Regel geschlossene und offene Zellen auf. Der Anteil an geschlossenen Zellen lässt sich durch Zusatz von Komponente iv) wie beispielsweise Joncryl ADR 4368 deutlich erhöhen. Für die Schallabsorption kann es von Vorteil sein, den Anteil an offenzelligen Strukturen zu erhöhen.

Die erfindungsgemäßen Polymermischungen eignen sich sehr gut für transparente, steife oder halbsteife Verpackungen, Elemente, Behälter etc. wie sie in: "Polymer Extrusion", Chris Rauwendaal, Carl Hanser, 1986; "Thermoforming", James Thorne, Carl Hanser, 1986; "Einführung in die Kunststoffverarbeitung", Walter Michaeli, Carl Hanser, 2006; "Handbuch Spritzgießen", Friedrich Johannaber, W. Michaeli, Carl Hanser, 2004; "Blow Molding Handbook", Dominik V. Rosato et al., Carl Hanser, 2004; "Kunststoff Maschinenführer", Friedrich Johannaber, Carl Hanser, 2004 offenbart sind. Zu nennen sind hier insbesondere Becher, Deckel, Schalen, Strohhalme im Catering, Fast Food-Bereich. Transparente Verpackungen für Molkereiprodukte, transparente, halbsteife Verpackungen für Wurst und Fleisch, Käse, Fisch, Obst und Gemüse, Tabletten und Arzneimittel.

Die erfindungsgemäßen Polymermischungen lassen sich hervorragend zu Schlauchfolien, Stretchfolien, abziehbaren Folien und Schrumpffolien weiterverarbeiten. Mögliche Anwendungen sind hier Bodenfaltbeutel, Seitennahtbeutel, Tragetaschen mit Griffloch, Schrumpfetiketten oder Hemdchentragetaschen.

Schrumpffolien zeichnen sich durch eine Schrumpfrate in Extrusionsrichtung der Schrumpffolie von mehr als 40 %, bevorzug von mehr als 50 % und besonders bevorzugt von mehr als 60 % aus. Die Schrumpffolie hat in der senkrechten Richtung vergleichsweise niedrige Schrumpfwerte von kleiner 40 %, bevorzugt kleiner 25 % und besonders bevorzugt kleiner 15 %. Die Schrumpfwerte beziehen sich auf eine Erwärmung der Folie im Schrumpftunnel auf mindestens 10°C bevorzugt mindestens 30°C oberhalb der Glasübergangstemperatur. Besonders bevorzugt ist eine Erwärmung auf mindestens 50°C (bevorzugt mindestens 30°C) unterhalb der Schmelztemperatur des Folienmaterials, so dass die Folie beim Schrumpfvorgang auch verschweißt werden kann.

Schrumpffolien oder Schrumpfetiketten werden heute vielfach eingesetzt um Flaschen oder sonstige Behältnisse mit einer druckbaren Information zu versehen. Beispiele hierfür sind Full-Body-Sleeves, Shrink Sleeves, Promotion Packs, Sicherheitsverschlüsse usw. wie beispielsweise in "Kunststoff-Folien Herstellung - Eigenschaften - Anwendung", Joachim Nentwig, Carl Hanser, 2001 beschrieben.

Durch dieses Verfahren werden die Mischungen erfindungsgemäßen z. B. zu folgenden Produkten verarbeitet: Folien für Hygieneanwendungen: z. B. Außenbeläge für Windeln (Backsheets), Produkte für die Monatshygiene, Obst- und Gemüsetüten, Zeitungseinschlagfolien, Tragetaschen, Einkaufstaschen, Komposttüten, Abfallbeutel, abziehbare Verschlussfolie - transparent oder undurchsichtig - schweißbare Verschlussfolie - transparent oder undurchsichtig - , Wursthülle, Salatfolie, Frischhaltefolie (Stretchfolie) für Obst und Gemüse, Fleisch und Fisch, Stretchfolie zum Einschlagen von Paletten, Folie für Netze, Verpackungsfolien für Snacks, Schoko- und Müsliriegel, peelbare Deckelfolien für Molkereiverpackungen (Joghurt, Sahne etc.), Obst und Gemüse, halbharte Verpackungen für geräucherte Wurst und Käse.

Mit Hilfe der erfindungsgemäßen biologisch abbaubaren Polyestermischungen werden biologisch abbaubare Polymermischungen erhalten, die sich problemlos (blasenstabil) zu durchstoßfesten Folien verarbeiten lassen.

Ein umfassender Überblick bezüglich Verpackungstechnologie findet sich in Referenz: "Food Packaging Technology", Richard Coles, Derek McDowell, Mark Blackwell Publishing, CNC Press, 2003 und "Wursthüllen Kunstdarm - Herstellung - Eigenschaften - Anwendung", Gerhard Effenberger, Holzmann Verlag, 1991. Ausgehend von den erfindungsgemäßen Mischungen sind z. B. Schutzgaspackungen, transparente Trennfolien, Folien, die gekocht und sterilisiert werden können, und metallfreie Trennfolien erhältlich.

Aufgrund ihrer für biologisch abbaubare Folien hervorragenden Barriereeigenschaften gegenüber Sauerstoff und Aromen sind die erfindungsgemäßen Mischungen prädestiniert zum Verpacken von Fleisch, Geflügel, Fleischprodukten, verarbeitetem Fleisch, Würstchen, geräucherter Wurst, Meeresfrüchten, Fisch, Krebsfleisch, Käse, Käseprodukten, Desserts, Pasteten z. B. mit Fleisch-, Fisch-, Geflügel-, Tomatenfüllung, Pasten und Brotaufstrichen; Brot, Kuchen, andere Backwaren; Obst, Obstsäfte, Gemüse, Tomatenmark, Salate; Tiernahrung; pharmazeutische Produkte; Kaffee, kaffeeartige Produkte; Milch- oder Kakaopulver, Kaffeeweißer, Babynahrung; getrocknete Nahrungsmittel; Marmeladen und Gelees; Brotaufstriche, Schokocreme; Fertiggerichte. Weitere Informationen siehe Referenz in "Food Processing Handbook", James G. Brennan, Wiley-VCH, 2005.

Aufgrund der Möglichkeiten in der konstruktiven Ausführung sind die Mischungen auch verwendbar für Hygieneprodukte wie Zahnbürsten, Kämme, Q-tips, Lippenstifte oder -bürstchen, extrudierte Schläuche als Gartenschläuche, zwei- und dreidimensionale Kunstwerke etc.

Wegen der interessanten haptischen Eigenschaften können die erfindungsgemäßen Mischungen für Schuhwerk, z. B. als Sohlen oder Einlagen, als Einlagen für Skistiefel, als Knieschoner, Schulterstücke, BH-Einlagen oder andere Sport- Kosmetik- oder medizinischen Produkte verwendet werden.

Die Mischungen können z. B. durch ein Spinnverfahren auch zu Fasern geformt und zur Herstellung von Kleidungsstücken, Bettlaken oder Decken verwendet werden.

Die Mischungen lassen sich auch hervorragend zu Wood Plastic Composites (WPC) weiterverarbeiten.

WPC (englisch Wood Plastic Composites, auch Wood(-fiber)Polymer Composites; deutsch Holz-Kunststoff-Verbundwerkstoffe, Gebrauch unüblich) sind thermoplastisch verarbeitbare Verbundwerkstoffe, die aus unterschiedlichen Anteilen von Holz, Kunststoffen und Additiven bestehen, und durch thermoplastische Formgebungsverfahren, wie z. B. Extrusion, Spritzgießverfahren, Rotationsgussverfahren, mittels Presstechniken oder im Thermoformverfahren, verarbeitet werden. Ab einem Faseranteil von über 20 Prozent werden sie den Biowerkstoffen zugeordnet
Vorteile des Werkstoffs gegenüber Holzwerkstoffen sind die freie, 3-dimensionale Formbarkeit des Werkstoffs und die größere Feuchteresistenz. Gegenüber Vollkunststoffen bieten WPC eine höhere Steifigkeit und einen deutlich geringeren thermischen Ausdehnungskoeffizienten
Wichtigster Absatzmarkt für WPC sind Deckings (Außenbodenbeläge), wo der Biowerkstoff aktuell einen Marktanteil von ca. 6 % hält - vor allem als Substitut für Tropenhölzer. In Zukunft wird ein Marktanteil von 20% für möglich gehalten. Deutlich angestiegen sind die Anwendungen in der Möbelindustrie (Möbelprofile, Fußbodenleisten), wo es unter anderem mehrere Stuhl- und Regalsysteme aus WPC gibt.

In der europäischen Automobilindustrie werden jährlich ca. 50.000 t WPC als Türinnenverkleidungen und Hutablagen (später verkleidet) eingesetzt. Thermoplastische Spritzguss-Erzeugnisse aus dem Biowerkstoff WPC sind bisher in Deutschland nur als "Nischenprodukte" zu finden (*Wikipedia*).

Durch Einsatz von Holzmehl und Naturfasern kann die Wärmeformbeständigkeit von PPC (Tg 25-35°C) und deren Mischungen noch weiter erhöht werden, so dass für PPC neue Anwendungsfelder erschlossen werden können.

Polymermischungen von PPC mit Stärke, Naturfasern und Holzmehl sind in der Literatur bereits in Polym Rev. 2008, 192-219 beschrieben. In der Regel steigt das Young Modul mit zunehmendem Füllstoffanteil, während die Bruchdehnung schon bei niedrigen Füllgehalten deutlich abnimmt.

### Beispiele:

### Anwendungstechnische Messungen:

Das Molekulargewicht Mn der teilaromatischen Polyester wurde wie folgt bestimmt:
15 mg der teilaromatischen Polyester wurden in 10 ml Hexafluoroisopropanol (HFIP) gelöst. Jeweils 125 µl dieser Lösung wurden mittels Gelpermeationschromatographie (GPC) analysiert. Die Messungen wurden bei Raumtemperatur durchgeführt. Für die Elution wurde HFIP + 0,05 Gew.-% Trifluoroessigsäure-Ka-Salz verwendet. Die Elutionsgeschwindigkeit betrug 0,5 ml/min. Dabei wurde folgende Säulenkombination verwendet (alle Säulen hergestellt von Fa. Showa Denko Ltd., Japan): Shodex® HFIP-800P (Durchmesser 8 mm, Länge 5 cm), Shodex® HFIP-803 (Durchmesser 8 mm, Länge 30 cm), Shodex® HFIP-803 (Durchmesser 8 mm, Länge 30 cm). Die teilaromatischen Polyester wurden mittels eines RI-Detektors (Differential-Refraktometrie) detektiert. Die Kalibrierung erfolgte mit eng verteilten Polymethylmethacrylat-Standards mit Molekulargewichten von Mn = 505 bis Mn = 2.740.000. Außerhalb dieses Intervalls liegende Elutionsbereiche wurden durch Extrapolation bestimmt.

### Permeations-Messungen

### Wasserdampf

Die Wasserdampf-Durchlässigkeitsmessungen bei 85% relativer Feuchte wurden mit einem MOCON PERMATRAN-W® 3/33 gemessen, dessen Messprinzip auf der Trägergas-Methode beruht.

Bei der Trägergasmethode werden die freien Probenfilme (ohne Trägermaterial) mit einer Fläche, in diesem Fall von 5 cm², in einer luftdichten Zelle mit beidseitigem Hohlraum eingebaut. Auf der einen Seite der Probe wird ein Trägergas (N2) und auf der anderen Seite das Messgas (N2 + Wasserdampf) drucklos vorbeigeleitet. Das durch die Probe diffundierende Messgas wird von dem Trägergas aufgenommen und zu einem selektiven Sensor geleitet. Bei Wasserdampfmessgeräten wird ein IR-Sensor eingesetzt. Somit kann die Wasserdampfkonzentration als Funktion der Zeit ermittelt werden.

Die Messungen werden bei 23°C nach ASTM F-1249 durchgeführt. Die Konditionierung des Gerätes dauert ca. eine halbe Stunde. Die Transmission Rate der Probe wird bei einer möglichst genauen Einstellung der relativen Feuchte von 85 % gemessen, der kleine messtechnische Fehler bei der Einstellung der Feuchte wird anschließend rechnerisch korrigiert. Hierbei wird angenommen, dass die Transmission Rate linear mit der relativen Feuchte in dem Messbereich korreliert.

Die Maschinenlaufzeit betrug für alle Messungen einen Tag.

### Sauerstoff

Die trockenen Sauerstoff-Durchlässigkeitsmessungen wurden mit einem MOCON OX-TRAN® 2/21 gemessen, dessen Messprinzip ebenfalls auf der Trägergas-Methode beruht.

Bei der Trägergasmethode werden die freien Probenfilme (ohne Trägermaterial) mit einer Fläche, in diesem Fall von 5 cm², in einer luftdichten Zelle mit beidseitigem Hohlraum eingebaut. Auf der einen Seite der Probe wird ein Trägergas (95% N2 und 5% H2) und auf der anderen Seite das Messgas (100% trockenes 02) drucklos vorbeigeleitet. Das durch die Probe diffundierende Messgas wird von dem Trägergas aufgenommen und zu einem selektiven Sensor geleitet. Somit kann die Sauerstoffkonzentration als Funktion der Zeit ermittelt werden.

Bei Sauerstoffmessgeräten wird ein elektrochemischer Detektor eingesetzt. Die Messungen werden bei 23°C durchgeführt. Das Gerät arbeitet nach der ASTM D-3985. Die Konditionierung des Gerätes dauert ca. eine halbe Stunde.

Die Maschinenlaufzeit betrug für alle Messungen einen Tag.

### Datenverarbeitung

Für beide Messverfahren wird die Transmission Rate [g/m²/day] der Probe normalisiert mit der mittleren Dicke der Folie, gemessen an 5 verschiedenen Stellen, somit ergibt sich die Permeation Rate [g.m /m²/day/bar]. Die Daten und Ergebnisse sind in der nachfolgenden Tabelle zu finden.

### Einsatzstoffe:

### Komponente i:

### i-1: Ecoflex® FBX 7011, hergestellt von BASF SE

### Komponente ii:

### ii-1: Polypropylencarbonat

### a. Katalysatorherstellung

In einem 1 I-Vierhalskolben, der mit Rührknochen, Heizbad und einer Wasserauskreiseinrichtung versehen war, wurden 35 g zerriebenes Zinkoxid in 250 ml absolutem Toluol vorgelegt. Nach Zugabe von 53 g Glutarsäure wurde unter Rühren 2 Stunden auf 55°C erwärmt. Danach wurde bis zum Sieden erhitzt, wobei unter Rückfluss das Reaktionswasser azeotrop abdestilliert wurde, bis kein Wasser mehr überging. Das Toluol wurde abdestilliert und der Rückstand bei 80°C im Hochvakuum getrocknet.

### b. Polymerisation

12 g Zinkglutarat wurden in den Reaktor vorgelegt. Es wurde ein 3,5 I-Autoklav mit mechanischem Rührer verwendet Nach Verschließen des Reaktors wurde mehrmals mit N₂-Gas gespült. Dann wurden 620 g Toluol zugegeben und bei Raumtemperatur (23°C) 6 bar CO₂ in den Reaktor gedrückt. Anschließend wurden 310 g Propylenoxid in den Reaktor gedrückt und auf 80°C aufgeheizt. Danach wurde bei 80°C solange CO₂ in den Reaktor gedrückt, bis ein CO₂-Druck von 40 bar erreicht wurde. Der Reaktor wurde für 4 h bei 80°C gehalten, wobei kein CO₂ nachdosiert wurde. Anschließend ließ man auf Raumtemperatur abkühlen.

### c. Aufarbeitung

Der Reaktor wurde belüftet und der Reaktorinhalt wurde in 1 I Essigsäureethylester, das mit 65 Gew.-% konzentrierter Essigsäure, bezogen auf die Polymermenge, und 2 Gew.-% Essigsäureanhydrid bezogen auf die Essigsäure angesäuert war, eingegossen. Es wurde 2 h bei 40° C nachgerührt. Anschließend wurde die organische Phase, dreimal mit 1 Liter Wasser gewaschen. Bei der organischen Phase wurde das Lösungsmittel vertreiben und der Polymerrückstand im Vakuum getrocknet.

### d. Analytik

Um den Anteil unerwünschten Nebenprodukten (zyklisches Propylencarbonat und den Polyetheranteil im Polymerrückgrad) zu bestimmen wurden auf einem NMR-Spektrometer AMX 300 der Fa. Bruker ¹H-NMR-Spektren aufgenommen. Der Polyetheranteil betrug 4.2 %, der Anteil an zyklischem Carbonat bezogen auf die Gesamtcarbonatmenge betrug ca. 2.0 %.

Des Weiteren wurde das Molekulargewicht (Mₙ und M_{w}) des Polymeren untersucht: Mₙ 52.000 g/mol, M_{w} 910.000 g/mol.

### Komponente iii,:

### iii-1: Polymilchsäure NatureWorks® 4020 der Fa. NatureWorks

### Komponente iv:

### iv-1: Joncryl® ADR 4368 der BASF B.V.

### Weitere Komponenten:

Additiv: Erucasäureamid (Cognis GmbH, D-Düsseldorf), Ethylenbisstearylamid, Calciumcarbonat (Omya BLS, OMYA GmbH, D-Köln)

### Als Masterbatches wurden verwendet: -

### v-1: Batch FBA-SL1 mit

- 73 % Komponente i-1,
- 20 % Komponenete iv-1,
- 7 % Erucasäureamid (Cognis GmbH, D-Düsseldorf)

### v-2: Batch SL 1 mit

- 90 % Komponente i-1,
- 10 % Erucasäureamid (Cognis GmbH, D-Düsseldorf)

### v-3: Batch AB 1 mit

- 40 % Komponente i-1,
- 60 % Calciumcarbonat (Omya BLS, OMYA GmbH, D-Köln)

### Compoundierung

Komponenten i-1 und iii-1 wurden im Wärmeschrank mit Umluft bei 60 °C auf kleiner 800 ppm Restfeuchte vorgetrocknet. Komponente ii-1 wurde infolge der niedrigen Tg bei Temperaturen kleiner 30 °C gelagert und vorgetrocknet.

Komponenten i-1, ii-1 und iii-1 und v-1 wurden bei 60°C auf kleiner 800 ppm Restfeuchte vorgetrocknet. Hier erfolgte die Vormischung der Komponenten mit Trockeneis, um einen Temperaturanstieg auf über 30 °C zu verhindern.

Anschließend wurden die Compounds auf einer ZSK 25 von Coperion, D-Stuttgart, bei 300 1/min. und einer Massetemperatur von 190 °C hergestellt. Der Durchsatz beträgt 10 kg/h. Die Produktstränge wurden im Wasserbad auf ca. 15 °C abgekühlt und mit einem Stranggranulator granuliert.

| Beispiel | Komponente i-1 [Gew.-%] | Komponente ii-1 [Gew.-%] | Komponente iii-1 [Gew.-%] | Komponente v-1 [Gew.-%] |
|---|---|---|---|---|
| 1 | 59 | 40 | | 1 |
| 2 | 49 | 40 | 10 | 1 |
| 3 | 54 | 13 | 32 | 1 |
| 4 | 41 | 13 | 45 | 1 |
| V1 | 97 | | | 1 + 2 Komp. v-iii |
| V2 | 54 | | 45 | 1 |
| V3 | 67 | | 32 | 1 |

### Folienherstellung

Die Folien wurden auf einer Schlauchfolienanlage hergestellt. Der Extruder (45 mm Durchmesser, 25 D Länge) wurde mit einer genuteten Einzugszone und einer Dreizonenschnecke mit Scher- und Mischteil betrieben. Die Einzugszone wurde bei maximalem Durchsatz mit kleiner 10°C kaltem Wasser gekühlt. Die Zonentemperaturen wurden so gewählt, dass die Massetemperatur zwischen 180°C und 190°C lag. Die Düsentemperaturen lagen im Bereich der Massetemperatur. Der Düsendurchmesser betrug 75 mm, die Spaltweite 1,2 mm. Die Drehzahl betrug bei dem gewählten Durchsatz von 10 kg/h 300 1/min. Das Aufblasverhältnis von 3,5 :1 ergab eine Liegebreite des Folieschlauches von 412 mm. Die Abzugsgeschwindigkeit bei einer Foliendicke von 30 µm betrug 2,7 m/min.

Lediglich beim Versuch V1 wurden die Komponenten vor der Folienherstellung trocken gemischt (Dryblend). Die anderen Produkte wurden ohne Vorbehandlung zu Folien verarbeitet. Aus den obengenannten Beispielen wurden die Folien F1, F2, F3, F4, F-V1, F-V2 und F-V3 erhalten.

**Tabelle 1: Gegenüberstellung der Folienergebnisse**

| **Prüfungen** | **Einheit** | **Verfahren** | **F1** | **F2** | **F3** | **F4** | **F-V1** | **F-V2** | **F-V3** |
|---|---|---|---|---|---|---|---|---|---|
| Foliendicke (Mittelwert) | µm | Folie | 30 | 30 | 30 | 30 | 30 | 30 | 30 |
| **Zugversuch E-Modul** | längs | ISO 527 | | | | | | | |
| E-Modul | Mpa | " | 610 | 907 | 1058 | 1509 | 108 | 788 | 1296 |
| Streckspannung | Mpa | " | 17,9 | 22,9 | 27,0 | 38,0 | 9,7 | 21,9 | 33,9 |
| Streckdehnung | % | " | 3,0 | 2,9 | 3,3 | 3,0 | 20,3 | 5,2 | 3,2 |
| Zugfestigkeit | MPa | " | 38,6 | 37,4 | 33,7 | 41,3 | 35,3 | 29,5 | 34,4 |
| Dehnung / F - max | % | " | 679 | 464 | 223 | 149 | 634 | 251 | 97 |
| Reißfestigkeit | MPa | " | 38,4 | 37,2 | 33,5 | 41,1 | 34,8 | 29,4 | 32,0 |
| Reißdehnung | % | " | 681 | 466 | 224 | 224 | 640 | 253 | 206 |
| **Zugversuch E-Modul** | quer | ISO 527 | | | | | | | |
| E-Modul | Mpa | " | 441 | 775 | 643 | 1203 | 102 | 414 | 703 |
| Streckspannung | Mpa | " | 14,6 | 19,8 | - | 27,2 | 9,1 | - | - |
| Streckdehnung | % | " | 4,7 | 3,6 | - | 4,0 | 18,7 | - | - |
| Zugfestigkeit | MPa | " | 38,7 | 35,9 | 33,6 | 34,2 | 39,5 | 30,6 | 29,7 |
| Dehnung / F - max | % | " | 614 | 434 | 274 | 137 | 749 | 310 | 217 |
| Reißfestigkeit | MPa | " | 38,5 | 35,6 | 33,4 | 34,0 | 39,1 | 30,4 | 29,5 |
| Reißdehnung | % | " | 616 | 437 | 275 | 153 | 753 | 312 | 220 |
| **Puncture Resistance** | | DIN 53373 | | | | | | | |
| Foliendicke (Mittelwert) | µm | Folie | 29 | 29 | 29 | 28 | 32 | 31 | 31 |
| W Bruch | N/mm | " | 53,3 | 52,5 | 27,4 | 23,3 | 26,0 | 27,6 | 39,3 |
| **Permeation** | | Folie | | | - | - | | | |
| O2 | cm³/m²/d | ASTM D 3985 | 320 | 267 | | | 2015 | 2320 | 1835 |
| O2 | cm³x1µm/m ²/d/bar | ASTM D 3985 | 9585 | 8685 | | | 58250 | 70150 | 58550 |
| H2O | g/m²/d | ASTM F 1249 | 72,8 | 63 | | | 249,5 | 167,5 | 119 |
| H2O | gx1µm/m²/d | ASTM F 1249 | 2155 | 2020 | | | 6850 | 4990 | 3745 |
| **Transparenz** | | ASTM D 1033 | | | | | | | |
| Transmission | % | " | 86,80 | 85,43 | 84,03 | 82,33 | 90,50 | 84,93 | 79,83 |
| Haze | % | " | 29,03 | 51,53 | 89,93 | 78,87 | 65,23 | 91,10 | 73,87 |
| Clarity | % | " | 58,27 | 34,40 | 8,87 | 12,43 | 80,80 | 8,60 | 22,77 |
| **Schrumpfung Wärmeschrank** | längs | | | | - | - | | - | - |
| Schrumpf bei 150°C/10Min. | % | | 34,9 | 35,7 | | | 10,7 | | |
| **Schrumpfung Wärmeschrank** | quer | | | | - | - | | - | - |
| Schrumpf bei 150°C/10Min. | % | | 20,3 | 24,2 | | | 0,6 | | |

### Vergleich der Folien F1 und F-V1 (s. Tabelle 1)

Die mechanischen Kennwerte der Folie F1 ist durch den zusätzlichen Anteil der erfindungsgemäßen Komponente ii-1 gegenüber F-V1 wie folgt verbessert (MD = In Extrusionsrichtung; CD = Senkrecht zur Extrusionsrichtung):

| F1 im Vergleich zu F-V1 s. Tabelle1 | Extrusionsrichtung MD [%] | Senkecht zur Extrusionsrichtung CD [%] |
|---|---|---|
| Mechanik | | |
| Steifigkeit (E-Modul) | + 465 | + 332 |
| Streckspannung | +85 | +60 |
| Zugfestigkeit | +9 | -2 |
| Reißdehnung | +6 | -18 |
| Durchstoßfestigkeit | +105 | |
| Permeation | | |
| Sauerstoff | -84 | |
| Wasserdampf | -68 | |
| Haze | -55 | |
| Schrumpf (150°C, 10 min.) | +226 | +2000 |

Die exzellente Steigerung von Steifigkeit, Streckspannung und Durchstoßfestigkeit hat nur eine geringe Reduktion der Reißdehnung senkrecht zu Extrusionsrichtung zur Folge. Die Zugfestigkeiten steigen leicht in MD und fallen nur geringfügig in CD ab.

Die Permeationswerte für Sauerstoff und Wasserdampf fallen bei gleicher Foliendicke auf 1/6 bzw. 1/3 des Ursprungswertes.

### Die Transparenz der Folien (Haze- Wert) verbessert sich um mehr als 50 %.

Die Schrumpfwerte sind in beiden Richtungen signifikant erhöht.

Diese Ergebnisse sind überraschend, da Komponente ii-1 in Komponente i-1 fein verteilt vorliegt und nicht die kontinuierliche Phase bildet.

### Vergleich der Folien F4 und F-V2 (s. Tabelle 1)

Die Folie F1 unterscheidet sich in der Zusammensetzung von Vergleichsfolie F-V2 dadurch, dass 13 % der Komponente i-1 durch Komponente ii-1 ersetzt wurden. Das Eigenschaftsprofil ändert sich wie folgt:

| F1 im Vergleich zu F-V1 s. Tabelle1 | Extrusionsrichtung MD [%] | Senkecht zur Extrusionsrichtung CD [%] |
|---|---|---|
| Mechanik | | |
| Steifigkeit (E-Modul) | +91 | +190 |
| Streckspannung | +78 | - |
| Zugfestigkeit | +40 | +12 |
| Reißdehnung | -11 | -51 |
| Durchstoßfestigkeit | -16 | |
| Haze | -14 | |

Die erfindungsgemäße Folie F4 weist im Vergleich zu F-V2 eine deutliche Steigerung der Steifigkeit und der Festigkeiten auf. Die Reißdehnung nimmt erwartungsgemäß bei der steiferen Folie F4 ab und die Durchstoßfestigkeit ist reduziert.

Die bessere Transparenz deutet auf eine Strukturänderung im Vergleich zu F-V2 hin. Die TEM-Aufnahmen (Transmissionselektronenmikroskopie) ergeben, dass nunmehr Komponente ii-1 die kohärente Phase bildet.

### Wood Plastic Composites (WPC)

### Beispiele

### Herstellung von Blends auf der Walze

Die Rollen der Walze werden auf 180°C erwärmt und PPC, Ecoflex und Polylactid oder die Polymermischungen der Beispiele 1 und 2 werden mit Holzmehl für mindestens 20 Minuten vermischt bis ein homogenes Walzfell entsteht:
Als Beispiele wurden folgende Abmischungen gewählt:
   Beispiel 5: 50 g Compound Beispiel 1 und 50 g Fichtenholzmehl
   Beispiel 6: 50 g Compound Beispiel 2 und 50 g Fichtenholzmehl

In allen Fällen wird ein steifes, nicht klebriges Walzfell erhalten. Die Felle wurden in kleinere Stücke zerschnitten (± 50-100 mm²) und mittels Press-Verfahren für nachfolgende analytische Zwecke in unterschiedliche Formen gebracht.
1. Vicat (ISO 306): Es werden Rundscheiben der Größe 1 cm² und einer Dicke von 4 mm gepresst.
2. HDT (ISO 75-1,-2): Es werden Stäbe mit der Abmessung 7 x 10 x 4 mm gepresst.
3. E-Modul (Zugversuch): Es werden Pressplatten mit einer Größe von 60 x 60 x 1 mm erzeugt und aus dieser werden dann in 5 cm lange Schulterstäbe ausgestanzt.

Es werden steife, nicht klebrige Formkörper erhalten.

### 2. Herstellung von Blends auf dem Extruder

Polymermischungen von PPC, Ecoflex, PLA und Holzmehl wurden mittels eines Miniextruders der Fa. DSM mit Rücklauf hergestellt. Hierzu wurden üblicherweise 11 g Polymer eingesetzt und bei 180°C für 3-5 Minuten miteinander vermischt. Die Polymerschmelze wurde in eine Schulterstabform eingespritzt und konnte anschließend leicht entnommen werden. Es werden steife, nicht klebrige Schulterstäbe erhalten.

### 3. Wärmeformbeständigkeit

| | Vicat (ISO 306) [°C] | HDT ISO 75-1,-2 [°C] |
|---|---|---|
| Komponente ii-1 | < 23 | nicht messbar |
| Beispiel 1 | 63,9 | 36,6 |
| Beispiel 2 | 50 | 40,5 |
| Beispiel 5 | 99.1 | 71.6 |
| Beispiel 6 | 107.4 | 86.3 |

Durch Zusatz von Fichtenholzmehl wird die Wärmeformbeständigkeit der Schulterstäbe erhöht. So wird beispielsweise durch Zusatz von 50% Fichtenholzmehl die Wärmeformbeständigkeitstemperatur ermittelt nach HDT ISO 75-1,-2 von Beispiel 1 um 35°C auf 71.6°C angehoben. Durch Zusatz von 10% PLA (Beispiel 2) kann diese auf 86,3°C gesteigert werden.

### Mechanische Eigenschaften der Schulterstäbe

| | E-Modul [MPa] | Bruchspannung [MPa] | Bruchdehnung [%] |
|---|---|---|---|
| Komponente ii-1 | 600 | 6 | 600 |
| Beispiel 1 | 180 | 25 | 600 |
| Beispiel 2 | 450 | 25 | 420 |
| Beispiel 5 | 1580 | 17 | 2 |
| Beispiel 6 | 2400 | 20 | 1 |

Durch Zusatz von Fichtenholzmehl wird die Steifigkeit des Materials deutlich erhöht. So nimmt das E-Modul in Beispiel 1 durch Zusatz von 50% Fichtenholzmehl um 1400 MPa zu. Durch Zugabe von 10% PLA wird die Steifigkeit noch weiter erhöht (2400 MPa). Dagegen nimmt die Bruchdehnung durch Zusatz der natürlichen Füllstoffe signifikant ab.

## Patentansprüche

1. Biologisch abbaubare Polymermischung, umfassend
i) 40 bis 95 Gew.-%, bezogen auf das Gesamtgewicht der Komponenten i bis ii, mindestens eines Polyesters auf Basis von aliphatischen und aromatischen Dicarbonsäuren und aliphatischen Dihydroxyverbindungen;
ii) 5 bis 60 Gew.-%, bezogen auf das Gesamtgewicht der Komponenten i bis ii, Polyalkylencarbonat, insbesondere Polypropylencarbonat;
iii) 0 bis 60 Gew.-%, bezogen auf das Gesamtgewicht der Komponenten i bis iii, mindestens eines biologisch abbaubarer Homo- oder Copolyester ausgewählt aus der Gruppe bestehend aus Polymilchsäure, Polycaprolacton und Polyhydroxyalkanoat und/oder eines anorganischen oder organischen Füllstoffs;
iv) 0,1 bis 5 Gew.-%, bezogen auf das Gesamtgewicht der Komponenten i bis ii, eines Epoxidgruppen-haltigen Copolymers auf Basis Styrol, Acrylsäureester und/oder Methacrylsäureester und
v) 0 bis 15 Gew.-% eines Additivs.

2. Biologisch abbaubare Polymermischung nach Anspruch 1, wobei Komponente i aufgebaut ist aus:
A) einer Säurekomponente aus
a1) 30 bis 99 mol-% mindestens einer aliphatischen Dicarbonsäure oder deren esterbildende Derivate oder Mischungen davon,
a2) 1 bis 70 mol-% mindestens einer aromatischen Dicarbonsäure oder deren esterbildendem Derivat oder Mischungen davon und
a3) 0 bis 5 mol-% einer sulfonatgruppenhaltigen Verbindung,
wobei die Molprozente der Komponenten a1) bis a3) zusammen 100 % ergeben und
B) einer Diolkomponente aus mindestens einem C₂-bis C₁₂-Alkandiol oder Mischungen davon
und gewünschtenfalls darüber hinaus eine oder mehrere Komponenten ausgewählt aus
C) einer Komponente ausgewählt aus
c1) mindestens einer Etherfunktionen enthaltenden Dihydroxyverbindung der Formel I
HO-[(CH₂)ₙ-O]ₘ-H (I)
in der n für 2, 3 oder 4 und m für eine ganze Zahl von 2 bis 250 stehen,
c2) mindestens einer Hydroxycarbonsäure der Formel IIa oder IIb 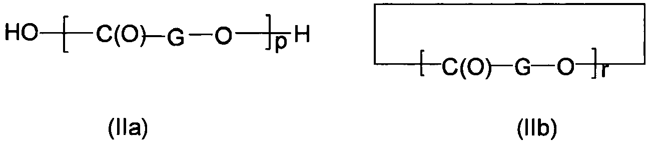 in der p eine ganze Zahl von 1 bis 1500 und r eine ganze Zahl von 1 bis 4 bedeuten, und G für einen Rest steht, der ausgewählt ist aus der Gruppe bestehend aus Phenylen, α-Hydoxyphenylen, -(CH₂)_{q}-, wobei q eine ganze Zahl von 1 bis 5 bedeutet, -C(R)H- und-C(R)HCH₂, wobei R für Methyl oder Ethyl steht
c3) mindestens einem Amino-C₂- bis C₁₂-alkanol oder mindestens einem Amino-C₅-bis C₁₀-cycloalkanol oder Mischungen davon
c4) mindestens einem Diamino-C₁- bis C₈-Alkan
c5) mindestens einem 2,2'-Bisoxazolins der allgemeinen Formel III 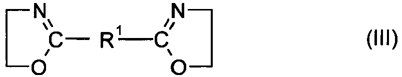 wobei R¹ eine Einfachbindung, eine (CH₂)_{z}-Alkylengruppe, mit z = 2, 3 oder 4, oder eine Phenylengruppe bedeutet
c6) mindestens einer Aminocarbonsäure ausgewählt aus der Gruppe, bestehend aus den natürlichen Aminosäuren, Polyamiden, erhältlich durch Polykondensation einer Dicarbonsäure mit 4 bis 6 C-Atomen und einem Diamin mit 4 bis 10 C-Atomen, Verbindungen der Formeln IV a und IVb 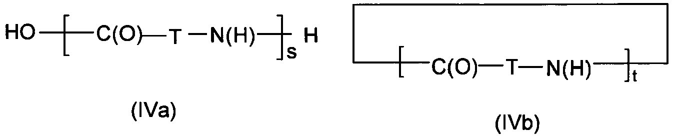 in der s eine ganze Zahl von 1 bis 1500 und t eine ganze Zahl von 1 bis 4 bedeuten, und T für einen Rest steht, der ausgewählt ist aus der Gruppe bestehend aus Phenylen, -(CH₂)ᵤ-, wobei u eine ganze Zahl von 1 bis 12 bedeutet, -C(R²)H- und -C(R²)HCH₂, wobei R² für Methyl oder Ethyl steht,
und Polyoxazolinen mit der wiederkehrenden Einheit V 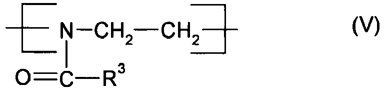
in der R³ für Wasserstoff, C₁-C₆-Alkyl, C₅-C₈-Cycloalkyl, unsubstituierten oder mit C₁-C₄-Alkylgruppen bis zu dreifach substituiertes Phenyl oder für Tetrahydrofuryl steht,
oder Mischungen aus c1) bis c6)
und
D) einer Komponente ausgewählt aus der Gruppe bestehend aus:
d1) einer Verbindung mit mindestens drei zur Esterbildung befähigten Gruppen,
d2) eines Di- oder Polyisocyanats,
d3) eines Di- oder Polyepoxids
oder Mischungen aus d1) bis d3).

3. Biologisch abbaubare Polymermischung nach Anspruch 2, wobei in Komponente i):
• die aliphatische Dicarbonsäure (Komponente a1)) Bernsteinsäure, Adipinsäure oder Sebacinsäure, deren Ester bildende Derivate oder Mischungen davon bedeutet;
• die aromatische Dicarbonsäure (Komponente a2)) Terephthalsäure oder deren Ester bildende Derivate bedeutet, und
• die Diolkomponente (Komponente B) 1,4-Butandiol oder 1,3-Propandiol bedeutet.

4. Biologisch abbaubare Polymermischung nach den Ansprüchen 1 bis 3, wobei Komponente iii: Polymilchsäure und/oder ein organischer Füllstoff ausgewählt aus der Gruppe bestehend aus Stärke, Holzmehl und Naturfaser ist.

5. Biologisch abbaubare Polymermischung nach den Ansprüchen 1 bis 4, wobei in Komponente iv das Epoxidgruppen-haltige Copolymer Glycidylethergruppen trägt.

6. Biologisch abbaubare Polymermischung nach den Ansprüchen 1 bis 5, umfassend
40 bis 80 Gew.-% Komponente i und
60 bis 20 Gew.-% Komponente ii,
jeweils bezogen auf das Gesamtgewicht der Komponenten i bis ii.

7. Biologisch abbaubare Polymermischung nach Anspruch 6, umfassend
| | |
|---|---|
| 40 bis 60 Gew.-%, | bezogen auf das Gesamtgewicht der Komponenten i bis ii, Komponente i; |
| 60 bis 40 Gew.-%, | bezogen auf das Gesamtgewicht der Komponenten i bis ii, einer Mischung bestehend aus: |
| | - 20 bis 80 Gew.-% Polypropylencarbonat; und |
| | - 80 bis 20 Gew.-% Polymilchsäure oder Polyhydroxyalkanoat. |

8. Biologisch abbaubare Polymermischung nach Anspruch 6 oder 7, wobei Komponente i eine kontinuierliche oder kokontinuierliche Phase ausbildet.

9. Biologisch abbaubare Polymermischung nach Anspruch 6 oder 7, wobei die Komponenten ii oder die Komponenten ii und iii eine kontinuierliche oder kokontinuierliche Phase ausbilden.

10. Verfahren zur Herstellung von biologisch abbaubaren Polymermischungen gemäß den Ansprüchen 1 bis 9, **dadurch gekennzeichnet, dass** die Komponenten i, ii und iii in einem Schritt gemischt und zur Reaktion gebracht werden.

11. Verfahren zur Herstellung von biologisch abbaubaren Polymermischungen gemäß den Ansprüchen 1 bis 9, **dadurch gekennzeichnet, dass** die Komponenten i, ii in einem Schritt gemischt werden und anschließend mit Komponenten iii und iv gemischt und zur Reaktion gebracht werden.

12. Verwendung der biologisch abbaubaren Polymermischungen gemäß den Ansprüchen 1 bis 9 zur Herstellung von Formteilen, Folien oder Fasern.

13. Formteile, Folien oder Fasern, umfassend biologisch abbaubare Polymermischungen gemäß den Ansprüchen 1 bis 9.

14. Schrumpffolie umfassend biologisch abbaubare Polymermischungen gemäß den Ansprüchen 1 bis 9.

15. Abziehfolie umfassend biologisch abbaubare Polymermischungen gemäß den Ansprüchen 1 bis 9.

16. Streckfolie umfassend biologisch abbaubare Polymermischungen gemäß den Ansprüchen 1 bis 9.

17. Schaumlage oder Partikelschaum umfassend biologisch abbaubare Polymermischungen gemäß den Ansprüchen 1 bis 9.

## Claims

1. A biodegradable polymer mixture comprising
i) 40% to 95% by weight, based on the total weight of components i to ii, of at least one polyester based on aliphatic and aromatic dicarboxylic acids and aliphatic dihydroxy compounds;
ii) 5% to 60% by weight, based on the total weight of said components i to ii, of polyalkylene carbonate, particularly polypropylene carbonate;
iii) 0% to 60% by weight, based on the total weight of said components i to iii, of at least one biodegradable homo- or copolyester selected from the group consisting of polylactic acid, polycaprolactone and polyhydroxyalkanoate, and/or of an inorganic or organic filler;
iv) 0.1% to 5% by weight, based on the total weight of said components i to ii, of an epoxy-containing copolymer based on styrene, acrylic ester and/or methacrylic ester, and
v) 0% to 15% by weight of an additive.

2. The biodegradable polymer mixture according to claim 1 wherein said component i is constructed of:
A) an acid component composed of
a1) 30 to 99 mol% of at least one aliphatic dicarboxylic acid or its/their ester-forming derivatives or mixtures thereof,
a2) 1 to 70 mol% of at least one aromatic dicarboxylic acid or its/their ester-forming derivative or mixtures thereof, and
a3) 0 to 5 mol% of a sulfonated compound,
the mole percentages of said components a1) to a3) together adding up to 100%, and
B) a diol component composed of at least one C₂- to C₁₂-alkanediol or mixtures thereof
and, if desired, also one or more components selected from
C) a component selected from
c1) at least one dihydroxy compound comprising ether functions and having the formula I
HO-[(CH₂)n-O]ₘ-H (I)
where n represents 2, 3 or 4 and m represents an integer from 2 to 250,
c2) at least one hydroxy-carboxylic acid of the formula IIa or IIb 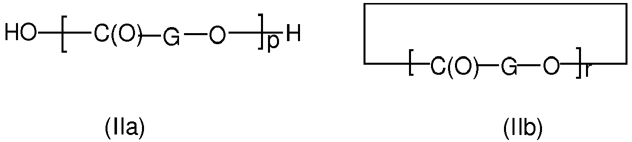 where p represents an integer from 1 to 1500 and r represents an integer from 1 to 4, and G represents a radical selected from the group consisting of phenylene, α-hydroxyphenylene, -(CH₂)_{q}-, where q is an integer from 1 to 5, -C(R)H- and -C(R)HCH₂, where R represents methyl or ethyl,
c3) at least one amino-C₂- to C₁₂-alkanol or at least one amino-C₅- to C₁₀-cycloalkanol or mixtures thereof,
c4) at least one diamino-C₁- to C₈-alkane,
c5) at least one 2,2'-bisoxazoline of the general formula III 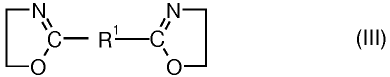 where R¹ represents a single bond, a (CH₂)_{z} alkylene group, where z = 2, 3 or 4, or a phenylene group,
c6) at least one amino carboxylic acid selected from the group consisting of natural amino acids, polyamides obtainable by polycondensation of a dicarboxylic acid having 4 to 6 carbon atoms and a diamine having 4 to 10 carbon atoms, compounds of the formulae IV a and IVb 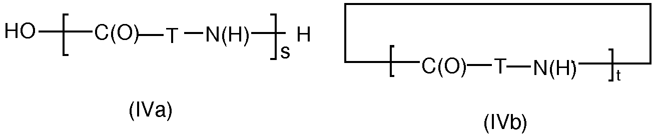 where s represents an integer from 1 to 1500 and t represents an integer from 1 to 4 and T represents a radical selected from the group consisting of phenylene, -(CH₂)ᵤ-, where u represents an integer from 1 to 12, -C(R²)H- and -C(R²)HCH₂, where R² represents methyl or ethyl,
and polyoxazolines comprising the repeat unit V 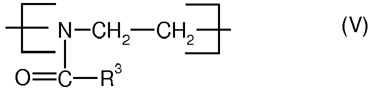
where R³ represents hydrogen, C₁-C₆-alkyl, C₅-C₈-cycloalkyl, unsubstituted phenyl, phenyl substituted up to three times with C₁-C₄-alkyl groups or tetrahydrofuryl,
or mixtures of c1) to c6)
and
D) a component selected from the group consisting of:
d1) a compound having at least three groups capable of ester formation,
d2) a di- or polyisocyanate,
d3) a di- or polyepoxide
or mixtures of d1) to d3).

3. The biodegradable polymer mixture according to claim 2 wherein in said component i):
• the aliphatic dicarboxylic acid (component a1)) comprises succinic acid, adipic acid or sebacic acid, their ester-forming derivatives or mixtures thereof;
• the aromatic dicarboxylic acid (component a2)) comprises terephthalic acid or its ester-forming derivatives, and
• the diol component (component B) comprises 1,4-butanediol or 1,3-propanediol.

4. The biodegradable polymer mixture according to claims 1 to 3 wherein said component iii is polylactic acid and/or an organic filler selected from the group consisting of starch, wood flour and natural fibers.

5. The biodegradable polymer mixture according to claims 1 to 4 wherein the epoxy-containing copolymer in said component iv bears glycidyl ether groups.

6. The biodegradable polymer mixture according to claims 1 to 5 comprising
40% to 80% by weight of said component i and
60% to 20% by weight of said component ii,
all based on the total weight of said components i to ii.

7. The biodegradable polymer mixture according to claim 6 comprising
40% to 60% by weight, based on the total weight of said components i to ii, of said component i;
60% to 40% by weight, based on the total weight of said components i to ii, of a mixture consisting of:
- 20% to 80% by weight of polypropylene carbonate; and
- 80% to 20% of polylactic acid or polyhydroxyalkanoate.

8. The biodegradable polymer mixture according to claim 6 or 7 wherein said component i forms a continuous or cocontinuous phase.

9. The biodegradable polymer mixture according to claim 6 or 7 wherein said components ii or said components ii and iii for a continuous or cocontinuous phase.

10. A process for producing a biodegradable polymer mixture according to claims 1 to 9, which comprises said components i, ii and iii being mixed and reacted in one operation.

11. A process for producing a biodegradable polymer mixture according to claims 1 to 9, which comprises said components i, ii being mixed in one operation and subsequently mixed and reacted with said components iii and iv.

12. The use of the biodegradable polymer mixture according to claims 1 to 9 in the production of a molding, film or fiber.

13. A molding, film or fiber comprising a biodegradable polymer mixture according to claims 1 to 9.

14. A shrink wrapping film comprising a biodegradable polymer mixture according to claims 1 to 9.

15. A peelable film comprising a biodegradable polymer mixture according to claims 1 to 9.

16. A stretch wrapping film comprising a biodegradable polymer mixture according to claims 1 to 9.

17. A foam ply or bead foam comprising a biodegradable polymer mixture according to claims 1 to 9.

## Revendications

1. Mélange de polymères biodégradable, comprenant :
i) 40 à 95 % en poids, par rapport au poids total des composants i à ii, d'au moins un polyester à base d'acides dicarboxyliques aliphatiques et aromatiques et de composés dihydroxy aliphatiques ;
ii) 5 à 60 % en poids, par rapport au poids total des composants i à ii, d'un polycarbonate d'alkylène, notamment de polycarbonate de propylène ;
iii) 0 à 60 % en poids, par rapport au poids total des composants i à iii, d'au moins un homo- ou copolyester biodégradable choisi dans le groupe constitué par l'acide polylactique, la polycaprolactone et le polyhydroxyalcanoate et/ou d'une charge inorganique ou organique ;
iv) 0,1 à 5 % en poids, par rapport au poids total des composants i à ii, d'un copolymère contenant des groupes époxyde à base de styrène, d'esters de l'acide acrylique et/ou d'esters de l'acide méthacrylique, et
v) 0 à 15 % en poids d'un additif.

2. Mélange de polymères biodégradable selon la revendication 1, dans lequel le composant i est constitué par :
A) un composant acide constitué par
a1) 30 à 99 % en moles d'au moins un acide dicarboxylique aliphatique ou ses dérivés formant des esters ou leurs mélanges,
a2) 1 à 70 % en moles d'au moins un acide dicarboxylique aromatique ou ses dérivés formant des esters ou leurs mélanges, et
a3) 0 à 5 % en moles d'un composé contenant des groupes sulfonate,
la somme des pourcentages en moles des composants a1) à a3) étant de 100 %, et
B) un composant diol constitué d'au moins un alcanediol en C₂ à C₁₂ ou leurs mélanges,
et si on le souhaite en outre un ou plusieurs composants choisis parmi :
C) un composant choisi parmi :
c1) au moins un composé dihydroxy contenant des fonctions éther de formule I
HO-[(CH₂)ₙ-O]ₘ-H (I)
dans laquelle n représente 2, 3 ou 4, et m représente un nombre entier de 2 à 250,
c2) au moins un acide hydroxycarboxylique de formule IIa ou IIb 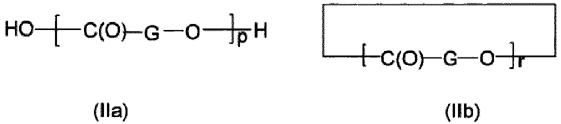 dans lesquelles p signifie un nombre entier de 1 à 1 500 et r signifie un nombre entier de 1 à 4, et G représente un radical qui est choisi dans le groupe constitué par phénylène, α-hydroxyphénylène, -(CH₂)_{q}-, q signifiant un nombre entier de 1 à 5, -C(R)H- et-C(R)HCH₂, R représentant méthyle ou éthyle,
c3) au moins un amino-alcanol en C₂ à C₁₂ ou au moins un amino-cycloalcanol en C₅ à C₁₀ ou leurs mélanges,
c4) au moins un diamino-alcane en C₁ à C₈,
c5) au moins une 2,2'-bisoxazoline de formule générale III 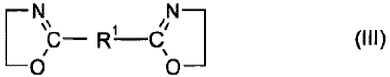 dans laquelle R¹ signifie une liaison simple, un groupe alkylène -(CH₂)_{z}- avec z = 2, 3 ou 4, ou un groupe phénylène,
c6) au moins un acide aminocarboxylique choisi dans le groupe constitué par les acides aminés naturels, les polyamides, pouvant être obtenus par polycondensation d'un acide dicarboxylique de 4 à 6 atomes C et d'une diamine de 4 à 10 atomes C, les composés de formule IVa et IVb 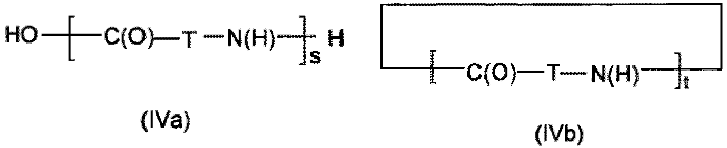 dans lesquelles s signifie un nombre entier de 1 à 1 500 et t signifie un nombre entier de 1 à 4, et T représente un radical qui est choisi dans le groupe constitué par phénylène, -(CH₂)ᵤ-, u signifiant un nombre entier de 1 à 12, -C(R²)H- et -C(R²)HCH₂, R² représentant méthyle ou éthyle,
et les polyoxazolines contenant l'unité de répétition V 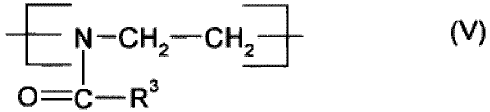 dans laquelle R³ représente hydrogène, alkyle en C₁-C₆, cycloalkyle en C₅-C₈, phényle non substitué ou substitué jusqu'à trois fois avec des groupes alkyle en C₁-C₄, ou tétrahydrofuryle,
ou des mélanges de c1) à c6)
et
D) un composant choisi dans le groupe constitué par :
d1) un composé contenant au moins trois groupes aptes à la formation d'esters,
d2) un di- ou polyisocyanate,
d3) un di- ou polyépoxyde,
ou des mélanges de d1) à d3).

3. Mélange de polymères biodégradable selon la revendication 2, dans lequel, dans le composant i) :
- l'acide dicarboxylique aliphatique (composant a1)) signifie l'acide succinique, l'acide adipique ou l'acide sébacique, ses dérivés formant des esters ou leurs mélanges ;
- l'acide dicarboxylique aromatique (composant a2)) signifie l'acide téréphtalique ou ses dérivés formant des esters, et
- le composant diol (composant B) signifie le 1,4-butanediol ou le 1,3-propanediol.

4. Mélange de polymères biodégradable selon les revendications 1 à 3, dans lequel le composant iii est l'acide polylactique et/ou une charge organique choisie dans le groupe constitué par l'amidon, la farine de bois et les fibres naturelles.

5. Mélange de polymères biodégradable selon les revendications 1 à 4, dans lequel, dans le composant iv, le copolymère contenant des groupes époxyde porte des groupes éther glycidylique.

6. Mélange de polymères biodégradable selon les revendications 1 à 5, comprenant :
40 à 80 % en poids du composant i et
60 à 20 % en poids du composant ii,
à chaque fois par rapport au poids total des composants i à ii.

7. Mélange de polymères biodégradable selon la revendication 6, comprenant :
40 à 60 % en poids par rapport au poids total des composants i à ii, du composant i ;
60 à 40 % en poids par rapport au poids total des composants i à ii, d'un mélange constitué par :
- 20 à 80 % en poids de polycarbonate de propylène ; et
- 80 à 20 % en poids d'acide polylactique ou de polyhydroxyalcanoate.

8. Mélange de polymères biodégradable selon la revendication 6 ou 7, dans lequel le composant i forme une phase continue ou co-continue.

9. Mélange de polymères biodégradable selon la revendication 6 ou 7, dans lequel le composant ii ou les composants ii et iii forment une phase continue ou co-continue.

10. Procédé de fabrication de mélanges de polymères biodégradables selon les revendications 1 à 9, **caractérisé en ce que** les composants i, ii et iii sont mélangés et mis en réaction en une étape.

11. Procédé de fabrication de mélanges de polymères biodégradables selon les revendications 1 à 9, **caractérisé en ce que** les composants i, ii sont mélangés en une étape, puis mélangés avec les composants iii et iv et mis en réaction.

12. Utilisation des mélanges de polymères biodégradables selon les revendications 1 à 9 pour la fabrication de pièces moulées, de films ou de fibres.

13. Pièces moulées, films ou fibres, comprenant des mélanges de polymères biodégradables selon les revendications 1 à 9.

14. Film rétractable comprenant des mélanges de polymères biodégradables selon les revendications 1 à 9.

15. Film pelliculable comprenant des mélanges de polymères biodégradables selon les revendications 1 à 9.

16. Film étirable comprenant des mélanges de polymères biodégradables selon les revendications 1 à 9.

17. Couche de mousse ou mousse particulaire comprenant des mélanges de polymères biodégradables selon les revendications 1 à 9.
